# EUROPÄISCHE PATENTANMELDUNG

(11) **EP 1 566 660 A2**
(43) Veröffentlichungstag der Anmeldung: **24.08.2005**
(21) Anmeldenummer: 04029787.1
(22) Anmeldetag: 16.12.2004
(51) Int. Cl.: G01S 17/88

(54) **Verfahren zur Signalauswertung eines Umgebungssensors eines Kraftfahrzeuges**

(30) Priorität: 20.02.2004 DE 102004008866
(71) Anmelder: DaimlerChrysler AG, 70567 Stuttgart (DE)
(72) Erfinder: von Reyher, Alexander, 73728 Esslingen (DE)

(57) **Zusammenfassung**

Die Erfindung betrifft ein Verfahren zur Signalauswertung eines Umgebungssensors eines Kraftfahrzeuges, wobei aus den Signallaufzeiten ein Offset des Signals ermittelt wird sowie eine Neigung der Fahrbahn, indem das Signal einer ersten Filterung mit einer ersten Zeitkonstante unterzogen wird, um die Neigung der Fahrbahn zu ermitteln und indem das Signal einer weiteren Filterung mit einer zweiten Zeitkonstante unterzogen wird, um einen möglichen Offset des Signals zu ermitteln, wobei als Eingang des Filters zur Bestimmung der Neigung der Fahrbahn ein um den Ausgang des zweiten Filters bereinigtes Messsignal verwendet wird. Ggf. kann aus fahrdynamischen Eingangsgrößen unter Verwendung eines Fahrdynamikmodells ein der Fahrdynamik zuzuordnender Anteil des Nick- und/oder Wankwinkels des Kraftfahrzeugs ermittelt werden, wobei das Eingangssignal des Filters zur Bestimmung der Neigung der Fahrbahn gewonnen wird, indem von dem um den Ausgang des zweiten Filters bereinigten Messsignal weiterhin die der Fahrdynamik zuzuordnenden Anteile des Nick- und/oder Wankwinkels subtrahiert werden. Bei der Modellbildung kann ggf. auch das erste Filter ganz entfallen.

## Beschreibung

Die Erfindung betrifft ein Verfahren zur Signalauswertung eines Umgebungssensors eines Kraftfahrzeuges nach dem Oberbegriff des Patentanspruchs 1.

Ein derartiges Verfahren ist beispielsweise aus der DE 101 41 294 A1 bekannt. Demnach sollen Informationen über das Momentanverhalten des Fahrzeugs, insbesondere bei Brems- oder Beschleunigungsvorgängen, Kurvenfahrten und/oder ungleichmäßigen Gewichtsverteilungen im Rahmen der Signalauswertung berücksichtigt werden. Damit werden Veränderungen der Ebene erfasst, in die der Sensor relativ zur Fahrbahn abstrahlt.

Derartige Sensoren sind allgemein als optische Sensoren bekannt, wie beispielsweise sogenannte LIDAR-Sensoren. Ein derartiger optischer Sensor liefert eine Distanzmessung in einem bestimmten Öffnungswinkel und einer bestimmten Winkelauflösung. Ein Laserstrahl wird ausgesandt und die Zeit (Laufzeit) zwischen dem Aussenden und dem Empfang des Echos wird zur Bestimmung der Distanz des reflektierenden Objekts verwendet. Einige dieser Sensoren messen nicht nur in einer Ebene sondern ziehen bis zu sechs Ebenen in die Messung ein.

Der vorliegenden Erfindung liegt die Aufgabe zu Grunde, die Signalauswertung zu verbessern.

Diese Aufgabe wird nach der vorliegenden Erfindung gemäß Anspruch 1 gelöst, indem aus den Signallaufzeiten ein Offset des Signals ermittelt wird sowie eine Neigung der Fahrbahn, indem das Signal einer ersten Filterung mit einer ersten Zeitkonstante unterzogen wird, um die Neigung der Fahrbahn zu ermitteln und indem das Signal einer weiteren Filterung mit einer zweiten Zeitkonstanten unterzogen wird, um einen möglichen Offset des Signals zu ermitteln, wobei als Eingang des Filters zur Bestimmung der Neigung der Fahrbahn ein um den Ausgang des zweiten Filters bereinigtes Messsignal verwendet wird.

Es wird also ausgegangen von einer "normalen" Signallaufzeit bei einem eben stehenden Fahrzeug auf einer ebenen, das heißt planen, Fahrbahn, wobei das Fahrzeug unbeladen ist. Die "normale" Signallaufzeit ist dann die Signallaufzeit, die unter den dargelegten Referenzbedingungen auftritt.

Durch verschiedene Faktoren beeinflusst kommt es im laufenden Betrieb zu Abweichungen von dieser normalen Signallaufzeit.

Einer dieser Faktoren ist die Fahrzeugbeladung. Bei einer gleichmäßigen Ladungsverteilung kommt es zwar nicht zu einer "Schrägstellung" des Fahrzeugs im Sinne eines dauerhaften Nick- oder Wankwinkels. Allerdings kommt es auch bei einer solchen Beladung zu einer Einfederung des Fahrzeugs, so dass sich der Abstand des Anbringungsortes von der Fahrbahn auch bei einer homogenen Ladungsverteilung im beladenen Zustand des Fahrzeugs ändert.

Ein weiterer Aspekt bei der Fahrzeugbeladung ist die Ladungsverteilung. Durch eine ungleichmäßige Ladungsverteilung in Längsrichtung und/oder in Querrichtung des Fahrzeugs kann es zu einer "Schrägstellung" des Fahrzeugs kommen, was ebenfalls Einfluss auf die Signallaufzeit hat. Dies wurde bereits in der genannten DE 101 41 294 A1 erläutert.

Der Einfluss fahrdynamischer Größen ist bereits im Zusammenhang mit der DE 101 41 294 A1 beschrieben.

Ein weiterer Einflussfaktor ist weiterhin die Fahrbahnneigung. Hier ist nicht nur die Änderung und damit der Unterschied der Fahrbahnneigung gemeint in Vorausrichtung des Fahrzeugs zu der Neigung der Fahrbahn in dem Bereich, in dem sich das Fahrzeug momentan befindet wie dies in der DE 101 41 294 A1 beschrieben ist. Auch bei einer gleichbleibenden Neigung der Fahrbahn tritt auf Grund der Lage des Schwerpunkts des Fahrzeugs, die sich oberhalb der Fahrbahnoberfläche befindet, ein Drehmoment auf, das zu einer Einfederung des Fahrzeugs im Sinne eines Nick- und/oder Wankwinkels führt.

Im Rahmen der vorliegenden Erfindung können die Einflussfaktoren also dahin gehend zusammen gefasst werden, dass
- zum einen fahrdynamische Einflüsse bestehen im Sinne von Längs- und/oder Querbeschleunigungen in Folge von Kurvenfahrten, Anfahr- und Bremsvorgängen;
- weiterhin Einflüsse bestehen im Sinne einer Neigung der Fahrbahn, die wegen der Schwerpunktlage des Fahrzeugs zu entsprechenden Nick- bzw. Wankwinkeln des Fahrzeugs führen und
- weiterhin Einflüsse bestehen, die aus einer Beladung des Fahrzeugs resultieren oder gegebenenfalls auch aus einer Dejustierung des Sensors.

Der erstgenannte Einfluss wird berücksichtigt durch eine entsprechende Wahl der ersten Zeitkonstanten. Kurvenfahrten, Anfahr- und Bremsvorgänge haben ein typische Zeitdauer, die normaler Weise kürzer ist als die Zeitdauer, in der eine Strecke befahren wird bis sich deren Neigung ändert. Die erste Zeitkonstante muss also so groß gewählt werden, dass diese größer ist als dies der Zeitdauer für Kurvenfahrten, Anfahr- und Bremsvorgänge entspricht, so dass diese Signaleinflüsse entsprechend heraus gefiltert werden.

Hier ist es gegebenenfalls auch möglich die erste Zeitkonstante abhängig von gemessenen Längs- oder Querbeschleunigungen zu verändern. Bei einer gleichmäßigen Geradeausfahrt kann die Zeitkonstante dann kürzer gewählt werden als wenn entsprechende Fahrsituationen fest gestellt werden, die einer Kurvenfahrt oder einem Anfahr- bzw. Bremsvorgang entsprechen. Dies kann beispielsweise fest gestellt werden auf Grund einer Bremsbetätigung, einer Auswertung des Antriebsmomentes oder einer Auswertung des Lenkwinkels.

Weiterhin muss die erste Zeitkonstante so gewählt werden, dass der Einfluss der Fahrbahnneigung auf Grund einer zwischenzeitlichen Änderung der Fahrbahnneigung noch nicht verloren gegangen ist. Die erste Zeitkonstante muss also so gewählt werden, dass die erste Zeitkonstante kleiner ist als die typische Fahrdauer auf einer Strecke mit konstanter Fahrbahnneigung.

Die Dejustierung des Sensors ändert sich üblicher Weise nur bei einem Werkstattaufenthalt. Die Beladung ändert sich üblicher Weise nur, wenn das Fahrzeug angehalten hat. Das bedeutet, dass der letztgenannte Einfluss mit einer Zeitkonstanten erfasst werden kann, die größer ist als die erste Zeitdauer, so dass die dort genannten Einflüsse einschließlich des Einflusses der Fahrbahnneigung heraus gefiltert sind. Weiterhin muss die zweite Zeitkonstante so gewählt werden, dass diese Zeitkonstante kürzer ist als die entsprechende Größenordnung der durchschnittlichen Dauer einer Fahrt.

Der Ausgang des Filters mit der zweiten Zeitkonstanten wird dann im Folgenden von dem Messsignal subtrahiert, um den Offset des Signals zu eliminieren. Dieses bereinigte Messsignal wird als Eingang des ersten Filters verwendet, so dass dort der Offset des Signals eliminiert ist, um weiterhin aus diesem bereinigten Signal die Neigung der Fahrbahn zu bestimmen.

Bei einer weiteren erfindungsgemäßen Lösung der Aufgabe gemäß Anspruch 2 wird bei einem Verfahren zur Signalauswertung eines Umgebungssensors eines Kraftfahrzeuges aus fahrdynamischen Eingangsgrößen unter Verwendung eines Fahrdynamikmodells ein der Fahrdynamik zuzuordnender Anteil des Nick- und/oder Wankwinkels des Kraftfahrzeugs ermittelt. Weiterhin wird aus den Signallaufzeiten ein Offset des Signals ermittelt sowie eine Neigung der Fahrbahn, indem das Signal einer Filterung mit einer Zeitkonstante unterzogen wird, um einen möglichen Offset des Signals zu ermitteln, wobei zur Bestimmung der Neigung der Fahrbahn ein um den Ausgang des zweiten Filters bereinigtes Messsignal verwendet wird, von dem weiterhin die der Fahrdynamik zuzuordnenden Anteile des Nick- und/oder Wankwinkels subtrahiert werden.

Gegenüber dem Verfahren nach Anspruch 1 wird hier also mittels der Fahrdynamikgrößen der entsprechende Anteil des Nick- und/oder Wankwinkels unmittelbar errechnet, um dann einen entsprechenden Anteil unmittelbar von dem Messsignal abziehen zu können. Im Unterschied zum Anspruch 1 wird hier also der Anteil der Störgröße unmittelbar von dem Messsignal subtrahiert, so dass ohne zeitliche Verzögerung durch das Filter mit der ersten Zeitkonstante die Fahrbahnneigung ermittelt werden kann. Allerdings ist es notwendig, die Anteile von Nick- oder Wankwinkel dynamisch durch ein entsprechendes Modell zu ermitteln. Eventuelle Ungenauigkeiten der Darstellung durch das Modell wirken sich hier also bei der Errechnung der Fahrbahn aus, während dies bei der Lösung nach Anspruch 1 lediglich zu einer Verzögerung der Signalauswertung durch die Filterung führt.

Bei dem Verfahren nach Anspruch 3 wird aus fahrdynamischen Eingangsgrößen unter Verwendung eines Fahrdynamikmodells ein der Fahrdynamik zuzuordnender Anteil des Nick- und/oder Wankwinkels des Kraftfahrzeugs ermittelt, wobei das Eingangssignal des Filters zur Bestimmung der Neigung der Fahrbahn gewonnen wird, indem von dem um den Ausgang des zweiten Filters bereinigten Messsignal weiterhin die der Fahrdynamik zuzuordnenden Anteile des Nick- und/oder Wankwinkels subtrahiert werden.

Vorteilhaft wird hier der Einfluss der Störgröße unmittelbar subtrahiert, wobei durch die Verwendung des Filters weitere Signalstörungen heraus gefiltert werden können. Insgesamt kann also eine Verbesserung der Stabilität der Signalauswertung erreicht werden.

Bei der Ausgestaltung des Verfahrens nach Anspruch 4 wird weiterhin der Einfederweg der Federung des Fahrzeugs ermittelt, wobei aus der Einfederung des Fahrzeugs und dem Offset des Signals eine eventuelle Dejustierung des Sensors ermittelt wird.

Aus dem Ausgangssignal des Filters mit der zweiten Zeitkonstante lässt sich die Höhe des Sensors über der Fahrbahn ermitteln. Indem die Einfederung des Fahrzeugs ausgewertet wird, kann ermittelt werden, ob das Fahrzeugs in Folge der Beladung insgesamt eingefedert ist (Einfederung an allen Fahrzeugrädern) oder ob das Fahrzeug in Folge der Beladungsverteilung einen Nick- und/oder Wankwinkel aufweist (unterschiedliche Einfederung an den Fahrzeugrädern). Aus diesen Daten lässt sich also ermitteln, welcher Anteil des als Ausgang des Filters mit der zweiten Zeitkonstanten festgestellten Offsets auf die Beladung sowie die Beladungsverteilung zurück zu führen ist. Aus einer Abweichung des Offset von diesem aus der Beladung sowie der Beladungsverteilung ermittelten Erwartungswert des Offset lässt sich dann eine Dejustierung des Sensors ableiten.

Bei der Ausgestaltung des Verfahrens nach Anspruch 5 wird durch eine Auswertung der Intensität zumindest aller zur Fahrbahn gehörenden Messpunkte ein Maximum ermittelt, dessen Breite einer Spurmarkierung entspricht.

Vorteilhaft wird also durch die Auswertung der Signalintensität die Lage der Spurmarkierungen ermittelt. Die Intensität ist deswegen unterschiedlich, weil die Spurmarkierungen gegenüber dem normalen Fahrbahnbelag ein größeres Reflexionsvermögen aufweisen.

Damit lassen sich dann Warnsysteme für die Annäherung an die Spurgrenze oder auch Steuersysteme zur Spurführung von Fahrzeugen ansteuern.

Um den Aufwand bei der Signalverarbeitung zu verringern, können hierzu die Signale herangezogen werden, die in einem bestimmten Winkelbereich seitlich vor dem Fahrzeug liegen. Auf diese oder ggf. auch auf andere Art kann damit zur Signalauswertung nur die Signale ausgewertet werden, die auf der Fahrbahn liegen. Im Intensitätsbild wird ggf. unter Nutzung eines geeigneten Filters ein Maximum der Intensität gesucht, das der Breite nach einer Spurmarkierung entspricht. Die Positionen dieser Maxima aus jeder auf der Fahrbahn messenden Ebene des Sensors können zum Schätzen von Spurverlauf, Spurposition und Spurbreite heran gezogen werden.

Bei der Ausgestaltung nach Anspruch 6 werden die Signale von Messpunkten, die nicht zur Fahrbahn gehören, auf das Vorkommen zusammen hängender Segmente untersucht.

Damit kann vorteilhaft ein Fahrbahnrand erkannt werden, der sich als Randbebauung wie beispielsweise eine Bordsteinkante darstellen kann, die bei der Messung als Kante oder Bögen erscheinen. Es kann also damit der Fahrbahnrand aus den Signalen detektiert werden.

Damit können also der Fahrbahnverlauf, die Fahrbahnbreite und die Position (Lage) der Fahrbahn erkannt werden.

Dabei können zur Verringerung des Aufwandes bei der Signalauswertung vorteilhaft wieder alle Punkte unbeachtet gelassen werden, die ersichtlich zur Fahrbahn gehören. Dies kann insbesondere für alle Punkte gelten, die zwischen erkannten Spurmarkierungen liegen.

Bei der weiteren Ausgestaltung des Verfahrens nach Anspruch 7 werden zur Schätzung des Fahrbahnverlaufs weitere stehende Objekte wie beispielsweise Leitpfosten verwendet.

Vorteilhaft lässt sich damit der Straßenverlauf besser bestimmen.

Zur Verringerung des Bearbeitungsaufwandes ist es auch hier möglich, wieder die Bearbeitung auf die Signale zu beschränken, die nicht der Fahrbahn oder dem unmittelbaren Fahrbahnrand zuzuordnen sind.

Sofern ein Sensor verwendet wird, der in mehr als einer Ebene misst, ist es vorteilhaft möglich, zu erkennen, ob das Fahrzeug in Folge des Gewichts des Beladung einfedert oder ob sich ein entsprechender Signalanteil aus einer Dejustierung des Sensors oder der Ladungsverteilung ergibt. Auf Grund der unterschiedlichen Orientierung der beiden Ebenen zur bezogen auf das Fahrzeug horizontalen Ebene ändern sich bei einer gleichmäßigen Einfederung des Fahrzeugs die Signallaufzeiten der beiden Ebenen anders als bei einem entstehenden Nickwinkel.

Im Zusammenhang mit den vorstehenden Ansprüchen 5 bis 7 werden bei einem optischen Sensor, der in mehreren Ebenen misst, zusammenhängende Muster erkennbar, indem durch eine Auswertung der Signale jeder Ebene die entsprechenden Informationen zusammen gesetzt werden können.

Weiterhin wird das Fahrzeug hinsichtlich entstehender Nick- oder Wankwinkel noch von Fahrbahnunebenheiten beeinflusst. Diese führen zu hochfrequenten Schwingungsanteilen, die bei einer Abtastrate von etwa 20 ms bis 100 ms vom Sensor nicht mehr aufgelöst werden. Gegebenenfalls muss die erste Zeitkonstante so eingestellt werden, dass diese Signalanteile gefiltert werden.

Es ist gegebenenfalls auch möglich, die gewonnen Daten der vorgenannten Schätzungen der Fahrspur und der Fahrbahn zusammen zu fügen. Es kann dann abhängig von dem Anwendungsfall eine Gewichtung der Schätzungen vorgenommen werden, so dass sich die optimale Beschreibung der Spur bzw. der Fahrbahn finden lässt.

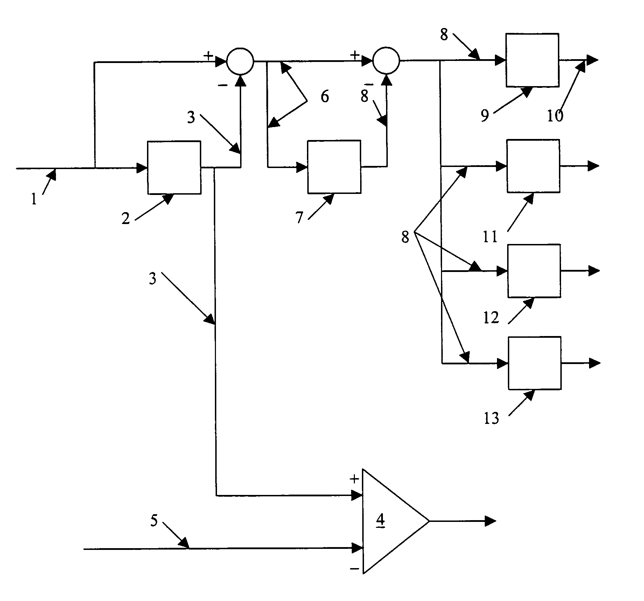

Ein Ausführungsbeispiel der Erfindung ist in der Zeichnung dargestellt.
Dabei zeigt die einzige Figur ein Blockschaltbild, das die Durchführung des Verfahrens darstellt. Abhängig von dem Umfang, in dem das Verfahren realisiert ist, können dabei einzelne Blöcke auch entfallen.

Mit dem Bezugszeichen 1 ist das Messsignal bezeichnet. Dieses stammt von einem vorzugsweise optischen Sensor, der ein optisches Signal in einer Ebene ausstrahlt, indem diese Ebene gescannt wird. Es wird das reflektierte Signal gemessen hinsichtlich der Laufzeit sowie ggf. auch der Intensität.

Dieses Messsignal 1 wird einem Funktionsblock 2 zugeführt, der ein Filter darstellt. Dieses Filter weist die zweite Zeitkonstante im Sinne dieser Anmeldung auf. Damit ist die zweite Zeitkonstante gemeint, die im Zusammenhang mit Anspruch 1 erläutert wurde und die Zeitkonstante, die im Zusammenhang mit Anspruch 2 erläutert wurde. Das Ausgangssignal 3 dieses Filters 2 ist der Offset des Sensors.

Dieses Ausgangssignal 3 kann einem Differenzbildner 4 zugeführt werden. Der andere Eingang dieses Differenzbildners 4 wird mit einem Signal 5 beaufschlagt. Dieses Signal 5 wird ermittelt aus den gemessenen Einfederwegen der Federung des Fahrzeugs. Aus diesen Daten wird ein Erwartungswert für den Offset des Sensors ermittelt. Wir durch den Differenzbildner 4 ermittelt, dass der gemessene Wert des Offset von diesem Erwartungswert abweicht, kann auf eine Dejustierung des Sensors geschlossen werden. Diese kann als Informationsausgabe angezeigt werden oder in einem Fehlerprotokoll vermerkt werden. Gegebenenfalls kann auch vorgesehen werden, dass die Abweichung einen bestimmten Schwellwert übersteigen muss, bevor entsprechende Maßnahmen getroffen werden.

Weiterhin ist zu sehen, dass von dem Messsignal 1 das Ausgangssignal 3 des Filter 2 subtrahiert wird. Dieses Signal 6 wird einer Kompensationseinrichtung 7 zugeführt. Dieser Kompensationseinrichtung 7 werden weiterhin Signale zugeführt, die das Antriebsmoment, ein Bremsmoment oder den Lenkwinkel (bzw. eine andere Größe, aus der sich die Gierrate ableiten lässt) repräsentieren. Daraus werden dann in der Kompensationseinrichtung 7 die Winkelanteile des Nick- und/oder Wankwinkels ermittelt, die auf diese fahrdynamischen Größen zurück gehen, so dass weiterhin der entsprechende Anteil von dem Signal 6 subtrahiert werden kann. Daraus ergibt sich dann das Signal 8.

Es ist auch möglich, in der Kompensationseinrichtung 7 lediglich fest zu stellen, ob ein Beschleunigungs- oder Bremsvorgang bzw. eine Kurvenfahrt vorliegt, um dann ggf. die Zeitkonstante des Filters 9 zu verändern. Gegebenenfalls kann die Zeitkonstante noch in Abhängigkeit von der Stärke des Beschleunigungs- oder Bremsvorgangs bzw. der Ausprägung der Kurve verändert werden. In der Kompensationseinrichtung werden die entsprechenden fahrdynamischen Größen vorteilhaft durch Auswertung entsprechender Einstellungen von Stellelementen des Fahrzeugs bzw. Auswertung von entsprechenden Raddrehzahlen erfasst. Bei dieser Lösung muss dann kein Fahrzeugmodell hinterlegt sein, bei dem konkret die Auswirkungen dieser Einflussgrößen auf das Sensorsignal berechnet und dann berücksichtigt werden. Vorteilhaft werden dann die entsprechenden Signalanteite heraus gefiltert. In diesem Zusammenhang ist beispielsweise möglich, in einem sogenannten Kalman-Filter ein vereinfachtes Fahrzeugmodell zu hinterlegen, um die Schätzung von Nick-, Wank und Hubverhalten des Fahrzeugs zu stützen.

Die Fahrbahnneigung wird in diesem Fall als konstanter Offset im Nick- bzw. Wankwinkel sichtbar. Ein Fahrbahnanstieg (d. h. eine Änderung der Fahrbahnneigung) würde sozusagen in die Messung hineinwandern und wäre mit einer weiteren Signalfilterung separat ermittelbar.

Das Filter 9 weist die erste Zeitkonstante auf im Sinne der vorstehenden Beschreibung. Das Ausgangssignal 10 dieses Filters 9 repräsentiert die Neigung der Fahrbahn.

Es ist weiterhin ein Funktionsblock 11 zu sehen, dem das Signal 8 oder gegebenenfalls auch das Signal 10 zugeführt werden kann. In dem Funktionsblock 11 wird aus der Signalintensität ermittelt, wo Spurmarkierungen liegen.

Es ist weiterhin ein Funktionsblock 12 zu sehen, dem das Signal 8 oder gegebenenfalls auch das Signal 10 zugeführt werden kann. In dem Funktionsblock 12 wird aus den Signalen, die nicht zur Fahrbahn gehören, ermittelt, ob zusammen hängende Segmente erkennbar sind, die beispielsweise einem Bordstein oder einem anderen signifikanten Fahrbahnrand entsprechen. Dadurch kann der Verlauf des Fahrbahnrandes erkannt werden.

Es ist weiterhin ein Funktionsblock 13 zu sehen, dem das Signal 8 oder gegebenenfalls auch das Signal 10 zugeführt werden kann. In dem Funktionsblock 13 wird aus den Signalen, die nicht zur Fahrbahn oder zum Fahrbahnrand gehören, ermittelt, ob regelmäßig wieder kehrende Objekte erfasst werden können, die beispielsweise Leitpfosten sind. Auch daraus kann der Verlauf der Fahrbahn vorher gesagt werden.

Die Signallaufzeiten des Sensors ändern sich derart, dass sich mit der Veränderung der Höhe des Sensors durch ein Absenken der Federung insgesamt oder durch einen Nickwinkel die Signallaufzeit beim Scannen einheitlich verändert.

Beim Auftreten eines Wankwinkels ändert sich die Signallaufzeit auf der einen Seite gegenüber der Signallaufzeit auf der anderen Seite, so dass sich also beim Scannen in einer Ebene entsprechend unterschiedliche Signallaufzeiten ergeben.

## Patentansprüche

1. Verfahren zur Signalauswertung eines Umgebungssensors eines Kraftfahrzeuges,
**dadurch gekennzeichnet,**
**dass** aus den Signallaufzeiten ein Offset des Signals ermittelt wird (2, 3) sowie eine Neigung der Fahrbahn (9, 10), indem das Signal einer ersten Filterung (9) mit einer ersten Zeitkonstante unterzogen wird, um die Neigung der Fahrbahn zu ermitteln (10) und indem das Signal einer weiteren Filterung (2) mit einer zweiten Zeitkonstante unterzogen wird, um einen möglichen Offset des Signals zu ermitteln (3), wobei als Eingang des Filters (9) zur Bestimmung der Neigung der Fahrbahn ein um den Ausgang (3) des zweiten Filters (2) bereinigtes Messsignal (4, 8) verwendet wird.

2. Verfahren zur Signalauswertung eines Umgebungssensors eines Kraftfahrzeuges, wobei aus fahrdynamischen Eingangsgrößen unter Verwendung eines Fahrdynamikmodells ein der Fahrdynamik zuzuordnender Anteil des Nick- und/oder Wankwinkels des Kraftfahrzeugs ermittelt wird (7, 8),
**dadurch gekennzeichnet,**
**dass** aus den Signallaufzeiten ein Offset des Signals ermittelt wird (2, 3) sowie eine Neigung der Fahrbahn (9, 10), indem das Signal einer Filterung (2) mit einer Zeitkonstante unterzogen wird, um einen möglichen Offset des Signals zu ermitteln (3), wobei zur Bestimmung der Neigung der Fahrbahn ein um den Ausgang (3) des Filters (2) bereinigtes Messsignal (4) verwendet wird, von dem weiterhin die der Fahrdynamik zuzuordnenden Anteile des Nick- und/oder Wankwinkels subtrahiert werden (7, 8).

3. Verfahren nach Anspruch 1,
**dadurch gekennzeichnet,**
**dass** aus fahrdynamischen Eingangsgrößen unter Verwendung eines Fahrdynamikmodells ein der Fahrdynamik zuzuordnender Anteil des Nick- und/oder Wankwinkels des Kraftfahrzeugs ermittelt wird, wobei das Eingangssignal (8) des Filters (9) zur Bestimmung der Neigung der Fahrbahn gewonnen wird, indem von dem von dem um den Ausgang (3) des zweiten Filters (2) bereinigten Messsignal (4) weiterhin die der Fahrdynamik zuzuordnenden Anteile des Nick- und/oder Wankwinkels subtrahiert werden (7, 8).

4. Verfahren nach einem der Ansprüche 1 bis 3,
**dadurch gekennzeichnet,**
**dass** weiterhin der Einfederweg der Federung des Fahrzeugs ermittelt wird (5), wobei aus der Einfederung des Fahrzeugs (5) und dem Offset des Signals (3) eine eventuelle Dejustierung des Sensors ermittelt wird (4).

5. Verfahren nach einem der Ansprüche 1 bis 4,
**dadurch gekennzeichnet,**
**dass** durch eine Auswertung der Intensität zumindest aller zur Fahrbahn gehörenden Messpunkte ein Maximum ermittelt wird, dessen Breite einer Spurmarkierung entspricht (11).

6. Verfahren nach einem der Ansprüche 1 bis 5,
**dadurch gekennzeichnet,**
**dass** die Signale von Messpunkten, die nicht zur Fahrbahn gehören, auf das Vorkommen zusammen hängender Segmente untersucht werden (12).

7. Verfahren nach einem der Ansprüche 1 bis 6,
**dadurch gekennzeichnet,**
**dass** zur Schätzung des Fahrbahnverlaufs weitere stehende Objekte wie beispielsweise Leitpfosten verwendet werden (13).
